# EUROPEAN PATENT SPECIFICATION

(11) **EP 3 388 369 B1**
(45) Date of publication and mention of the grant of the patent: **29.09.2021**
(21) Application number: 18167375.7
(22) Date of filing: 13.04.2018
(51) Int. Cl.: B65G 19/22, B65G 65/44, B65G 19/10, B65G 19/14

(54) **LOADING HOPPER WITH SCRAPER**
EINFÜLLTRICHTER MIT ABSTREIFER
TRÉMIE DE CHARGEMENT COMPORTANT UN GRATTOIR

(30) Priority: 14.04.2017 IT 201700041819
(43) Date of publication of application: 17.10.2018
(73) Proprietor: LM Industry S.R.L., 36056 Tezze sul Brenta (VI) (IT)
(72) Inventor: LANDO, Walter, 36050 BELVEDERE DI TEZZE SUL BRENTA (VI) (IT); LANDO, Denis, 36028 ROSSANO VENETO (VI) (IT); ZURLO, Luca, 35018 SAN MARTINO DI LUPARI (PD) (IT)
(74) Representative: Marchioro, Paolo

(56) References cited:
- EP-A1- 2 202 182
- DE-A1-102015 106 096

## Description

The invention concerns a loading hopper equipped with a scraper.

Vibrating and oscillating loading hoppers are currently known, which are used to separate a large quantity of objects that may be at least partially adherent to each other, and to progressively unload them in specific quantities on a successive transporting means, for example a conveyor belt, or a container, or another similar system.

These hoppers are usually provided with a flat bottom, inclined towards an unloading mouth and usually moved by two vibrating motors, or by mechanical oscillator means, or even by one pair of unbalanced shafts.

A movable scraper is positioned on the flat bottom, wherein said movable scraper is suited to translate on the bottom in such a way as to push the objects which have remained on the bottom towards the unloading mouth.

At present systems for spreading products in granules are also known, for example like those described in the European Patent EP2202182, which comprise a hopper on the bottom of which there are several movable scrapers suited to push said products in granules towards an unloading mouth.

A system for transporting bulk material, such as coal, debris and other solid materials or solid mixtures, is the subject of the German Patent application DE 102015106096; this system comprises a chain conveyor-scraper suited to convey bulk material under a handling unit, wherein the handling unit works on the bulk material. DE 102015106096 discloses the preamble of claim 1.

These hoppers, even if they are widespread and appreciated for their efficiency, pose some drawbacks.

A first drawback is related to the fact that often there are some objects, very small or having sharp parts, that undesirably get into the clearance created between the lower edge of the scraper and the bottom, making the advance of the scraper itself difficult and incorrect, with the risk of causing a malfunction and stopping the entire machine and thus the system in which the hopper is installed.

A second drawback is related to the fact that the objects, for example in the case of oily parts such as plain washers, may adhere to the sides of the hopper.

This means that, if the successive load includes different objects, the residual object from the previous load is mixed with the objects of such successive load, thus causing successive packaging errors and thus risks of returns after the sale of the objects.

It is the purpose of the present invention to provide a loading hopper with scraper which makes it possible to overcome the above mentioned drawbacks and limitations of the known art.

More specifically, it is one object of the invention to provide a loading hopper with scraper which ensures that all the objects placed in the hopper itself will be unloaded.

It is another object of the invention to provide a loading hopper with scraper which is more efficient compared to analogous hoppers of the known type.

It is a further object of the invention to provide a loading hopper with scraper which is easily adaptable to be integrated in different types of systems.

The purpose as well as the objects mentioned above are achieved by a loading hopper with scraper carried out according to claim 1.

Further characteristics of the loading hopper with scraper according to claim 1 are described in the dependent claims.

Said purpose and said objects, together with the advantages described below, are highlighted in the following description of an embodiment of the invention, which is provided by way of non-limiting example with reference to the attached drawings, wherein:

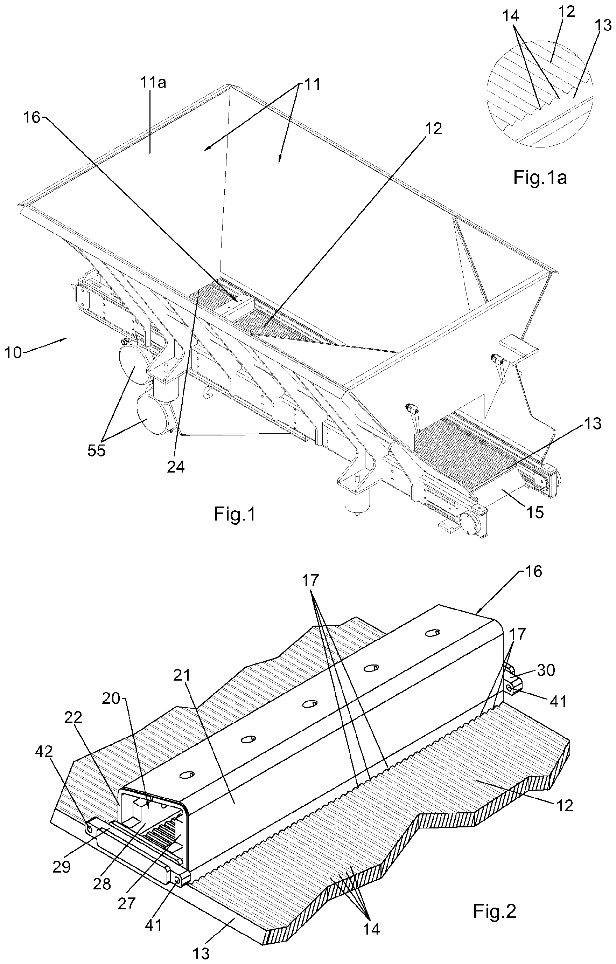

- Figure 1 shows a perspective view of a hopper with scraper according to the invention;
- Figure 1a shows an enlarged detail of Figure 1;
- Figure 2 shows a perspective view of a scraper of a hopper according to the invention;

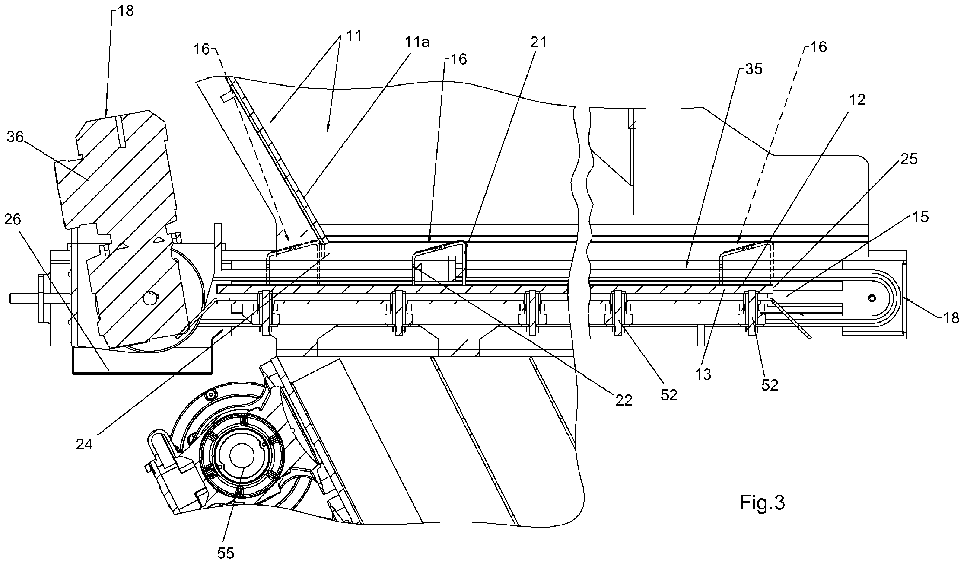

- Figure 3 shows a side sectional view of a hopper according to the invention;
- Figure 4 shows a portion of a sectional view of a hopper according to the invention;
- Figure 5 shows a perspective view of a detail of a hopper according to the invention;
- Figure 6 shows a perspective sectional view of a scraper of a hopper according to the invention;
- Figure 7 shows a perspective view of a detail of a hopper according to the invention.

With reference to the drawings listed above, a loading hopper equipped with a scraper according to the invention is indicated as a whole by the numeral **10.** Said loading hopper **10** comprises:
- side walls **11** designed to deviate a load towards an underlying bottom **12,**
- a grooved plate **13** defining the bottom **12** of the hopper **10** and provided with a plurality of longitudinal grooves **14** arranged side by side and developed over the length of the bottom **12,**
- a discharge opening **15** at the level of one end of said grooved plate **13,**
- a comb scraper **16** provided with scraping ridges **17** and **17a,** each one of which is shaped in such a way that it moves within a corresponding longitudinal groove **14** of the grooved plate **13,**
- moving means **18** suited to allow the comb scraper **16** to move on the grooved plate **13** between a rest position and an end-of-stroke position.

In the embodiment of a loading hopper with scraper **10** according to the invention described herein, which must be intended as a non-limiting example of the invention itself, the comb scraper **16** comprises a bearing frame **20** that on one side supports a first front comb **21,** and on the opposite side supports a second rear comb **22.**

The first comb **21** is provided with front scraping ridges **17** and is suited to intercept the objects which have fallen on the bottom of the hopper during the advance movement of the scraper **16,** meaning from the rest position to the end-of-stroke position.

The second comb **22** is provided with rear scraping ridges **17a** and is suited to intercept any further objects that fell on the bottom **12** during the return movement, wherein the return movement is the movement from the end-of-stroke position to the rest position.

The walls **11** of the hopper comprise a rear wall **11a,** which together with the bottom **12** defines a passage opening **24** whose dimensions are such as to allow the passage of the scraper **16.**

The rest position of the scraper **16** is the position of the scraper **16** itself under the rear wall **11a,** with the first comb **21** arranged in such a way as to obstruct the passage opening **24.**

The end-of-stroke position of the scraper **16** is the position of the scraper **16** itself with the first comb **21** at the level of the terminal edge **25** of the plate **13,** wherein said edge delimits the discharge opening **15.**

Under the end of the plate **13** opposite the discharge opening **15** there is a collection tray **26** suited to collect the further objects intercepted by the scraper **16** during the return movement.

In the example of embodiment described herein, the first comb **21** and the second comb **22** are constituted by two opposite portions of the same C-shaped bent plate.

Said bent plate **23** partially surrounds the bearing frame **20** and is fixed to it in a reversible manner, for example through threaded connection elements, not represented herein for the sake of simplicity and to be considered as known per se.

The bearing frame **20** comprises two crosspieces **27** and **28,** a front one and a rear one, spaced by one or more stiffening blocks **29** that connect the two crosspieces **27** and **28.**

Said bearing frame **20** has an anti-twist and anti-stick function for the scraper **16.**

The crosspieces **27** and **28** are provided with lateral constraining elements **29** and **30** which are suited to constrain them to the moving means **18** described here below.

Each one of said lateral constraining elements **29** and **30** is constituted, for example, by a bar provided with a front through hole **41** and an opposite rear through hole **42** suited to ensure a rotating connection with the moving means **18.**

The first comb **21** and the second comb **22** are fixed to the bearing frame **20** with threaded connection elements arranged in such a way that they pass through corresponding position adjusting slots, for example first slots **31** defined on the front crosspiece **27** and second slots **32** defined on the second comb **22.**

Thanks to the presence of said adjusting slots **31** and **32,** it is possible to precisely adjust the position of the scraping ridges **17** and **17a** of the scraper **16** inside the longitudinal grooves **14,** that is, to precisely adjust the clearance between the scraping ridges **17** themselves and the surfaces of the longitudinal grooves **14.**

In the present example of embodiment, the moving means **18** designed to move the scraper **16** on the grooved plate **13** comprise two lateral chains **35,** one for each side of the scraper **16.**

The chains **35** are moved by a motor **36,** for example positioned behind the rear wall **11a.**

More specifically, each chain **35** comprises external meshes **37** provided with a plurality of anti-adhesion ridges **38** suited to prevent the objects handled in the hopper from adhering to the chain **35** itself.

Said anti-adhesion ridges **38** are constituted, for example, by welding spots.

It is to be understood that said anti-adhesion ridges can be carried out also in a different manner.

Each chain **35** comprises, for each one of the interspaces between two consecutive external meshes **37,** an anti-pinch insert **39** fixed to a corresponding internal mesh of the chain **35** and suited to prevent any object present in the hopper from becoming stuck between two external meshes **37.** Each anti-pinch insert **39** is constituted by a small metal plate provided with two recesses **40** in the shape of arcs of a circle, said small metal plate being counter-shaped with respect to two opposite and symmetrical ends, in the shape of arcs of a circle or semi circles, of two adjacent external meshes **37** of a chain **35.**

Advantageously, also each anti-pinch insert **39,** like the external meshes **37,** is provided with anti-adhesion ridges **38.**

Each one of the chains **35** is constrained to a through hole **41** and **42** of a lateral constraining element **29** and **30.**

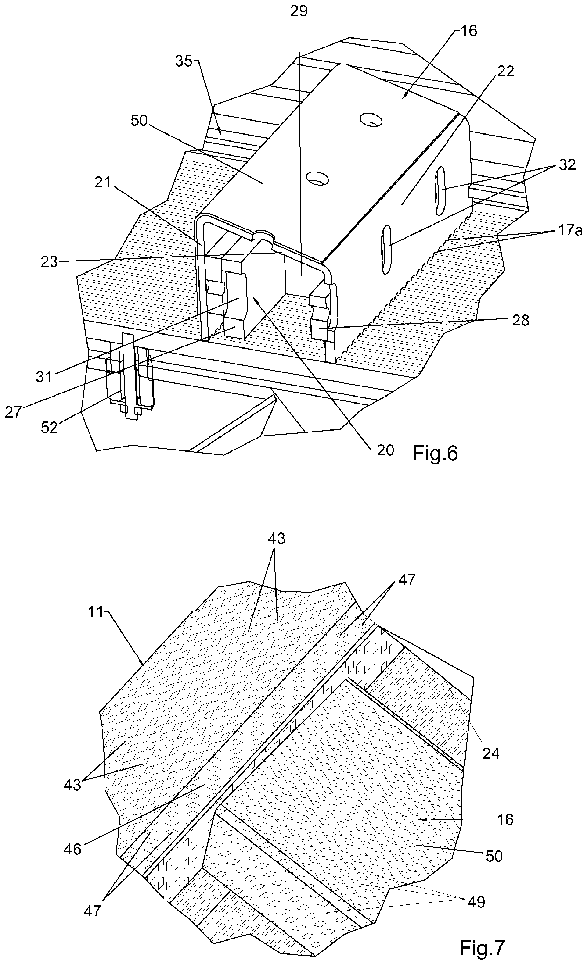

The side walls **11** designed to deviate a load towards an underlying bottom **12** are provided with a matrix of anti-adhesion ridges **43** that is distributed on the entirety of their internal surface, as shown by way of example in Figure 7.

Said matrix of anti-adhesion ridges **43** serves to prevent any objects that have been placed in the hopper **10** from getting stuck on the side walls **11.**

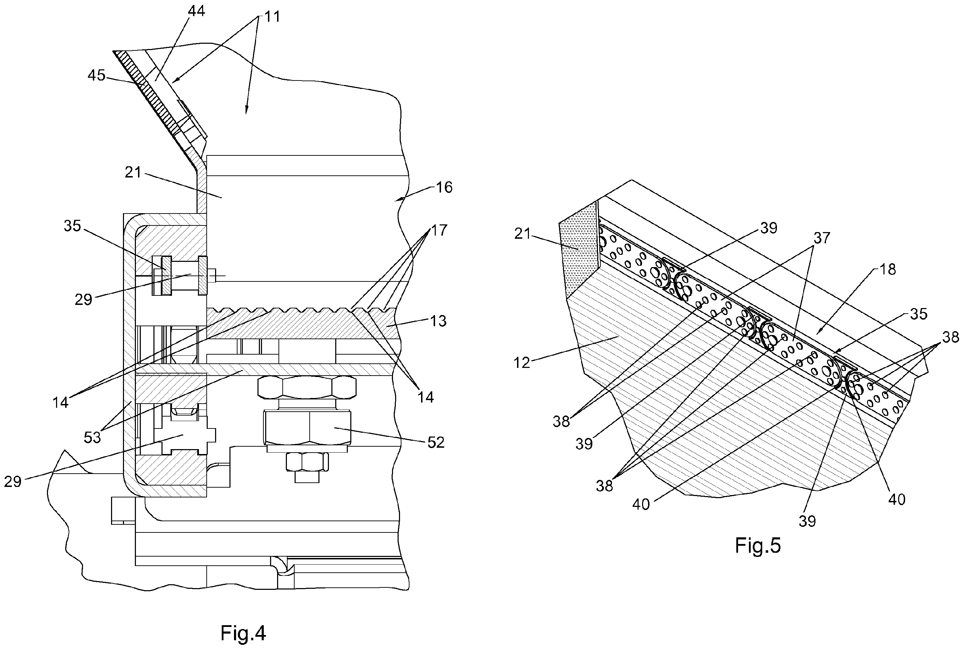

More specifically, in the present example of embodiment, said matrix of anti-adhesion ridges **43** is obtained on corresponding sheets **44** made of a plastic material, as shown by way of example in Figure 4, which in turn are glued onto an underlying structural plate **45.**

More specifically, said plastic sheets **44** are made of polyurethane.

The anti-adhesion ridges of said matrix of anti-adhesion ridges **43** are constituted by pyramid-shaped projections, for example with a quadrangular base, more specifically a base in the shape of a rhombus.

The elasticity of polyurethane prevents the loaded objects from being damaged and the indented shape avoids the generation of a sucker effect, thus preventing some types of objects coated with lubricants or other types of liquid from remaining attached to the side walls **11.**

The lower section **46** of each side wall **11,** as clearly shown in Figure 7, is also provided with anti-adhesion ridges **47.**

Said anti-adhesion ridges **47** contribute to reducing to a minimum, with great precision, the clearance between the scraper **16** and the lower sections **46** at the level of which the scraper **16** slides, in order to prevent any object present in the hopper **10** from becoming stuck in said clearance.

Said anti-adhesion ridges **47** are obtained on an indented metal plate.

Also the scraper **16** has an external surface on which a matrix of anti-adhesion ridges **49** is distributed.

Said anti-adhesion ridges **49** are obtained on an indented metal plate **50** which is shaped in such a way as to surround at least part of the scraper **16,** except for the front and rear scraping ridges **17** and **17a.**

The grooved plate **13** that defines the bottom **12** of the hopper **10** is obtained by means of scoring operations carried out with a milling machine.

The grooved plate **13** is supported by a plurality of height adjusters **52,** to be intended as being of a known type, which lie on a bearing frame **53** of the hopper **10.**

Thanks to said height adjusters **52,** it is possible to define the preferred inclination of the bottom **12** of the hopper.

The hopper **10** that is the subject of the invention is provided with means for vibrating and oscillating the grooved plate **13** which defines the bottom **12,** for example two vibrating motors **55.**

In practice, the description provided above shows how the invention achieves the set objects.

More specifically, the invention provides a loading hopper with scraper that, thanks to the scraper with front and rear scraping ridges and to the grooved plate, makes it possible to unload all of the objects introduced in the hopper itself.

Furthermore, the invention provides a loading hopper with scraper which ensures higher efficiency compared to the similar hoppers of known type, since, thanks to the matrices of anti-adhesion ridges distributed on all the surfaces that may come in contact with the loaded objects, the undesired stop of objects in areas different from the bottom of the hopper is not possible.

Furthermore, the invention provides a loading hopper with scraper which can be easily adapted for insertion in systems of different types.

In practice, any components and materials can be used, provided that they are compatible with the intended use, and any individual size and shape can be selected, according to the needs and to the state of the art as long as they fall within the scope of the appended claims.

In the case where the characteristics and the techniques mentioned in any one of the claims are followed by reference signs, said reference signs are to be understood as included only for the purpose of increasing the intelligibility of the claims themselves, and therefore said reference signs do not have any limiting effect on the identification of each element indicated by said reference signs by way of example.

## Claims

1. Loading hopper (10) with scraper, comprising:
- side walls (11) designed to deviate a load towards an underlying bottom (12),
**characterized in that it** comprises
- a grooved plate (13) defining said bottom (12) of the hopper and provided with a plurality of longitudinal grooves (14) which are arranged side by side and developed over the length of the bottom (12),
- a discharge opening (15) at the level of one end of said grooved plate (13),
- a comb scraper (16) provided with scraping ridges (17, 17a), each one of which is shaped in such a way that it moves within a corresponding longitudinal groove (14) of said grooved plate (13),
- moving means (18) suited to move said comb scraper (16) on said grooved plate (13) between a rest position and an end-of-stroke position.

2. Loading hopper according to claim 1, **characterized in that** said comb scraper (16) comprises a bearing frame (20) which on one side supports a first front comb (21) and on the opposite side supports a second rear comb (22), said first comb (21) being provided with front scraping ridges (17) and being suited to intercept the objects deposited on the bottom (12) of the hopper during the advance movement of the scraper (16), meaning from the rest position to the end-of-stroke position, said second comb (22) being provided with rear scraping ridges (17a) and being suited to intercept any further objects fallen on the bottom (12) during the return movement, wherein the return movement is to be understood as taking place from the end-of-stroke position to the rest position.

3. Loading hopper according to one or more of the preceding claims, **characterized in that** said walls (11) of the hopper comprise a rear wall (11a) which together with the bottom (12) defines a passage opening (24) whose size is such as to allow the scraper (16) to pass therethrough.

4. Loading hopper according to one or more of the preceding claims, **characterized in that** under the end of the plate (13) located opposite the discharge opening (15) there is a collection tray (26) which is suited to collect the further objects intercepted by the scraper (16) during the return movement.

5. Loading hopper according to claim 2, **characterized in that** said bearing frame (20) comprises two crosspieces (27, 28), a front one and a rear one, spaced from each other by one or more stiffening blocks (29) connecting the two crosspieces (27, 28).

6. Loading hopper according to the preceding claim, **characterized in that** said crosspieces (27, 28) are provided with lateral constraining elements (29, 30) suited to constrain them to the moving means (18).

7. Loading hopper according to one or more of the preceding claims, **characterized in that** said moving means (18) designed to move the scraper (16) on the grooved plate (13) comprise two lateral chains (35), one for each side of the scraper (16).

8. Loading hopper according to one or more of the preceding claims, **characterized in that** each chain (35) comprises external meshes (37) provided with a plurality of anti-adhesion ridges (38) suited to prevent the objects handled in the hopper from adhering to the chain (35) itself.

9. Loading hopper according to one or more of the preceding claims, **characterized in that** each chain (35) comprises, for each one of the interspaces between two consecutive external meshes (37), an anti-pinch insert (39) fixed to a corresponding internal mesh of the chain (35) and suited to prevent any object present in the hopper from becoming stuck between two external meshes (37).

10. Loading hopper according to one or more of the preceding claims, **characterized in that** said lateral walls (11) designed to deviate a load towards an underlying bottom (12) are provided with a matrix of anti-adhesion ridges (43) distributed on the entirety of their internal surface.

## Patentansprüche

1. Ladetrichter (10) mit Abstreifer, bestehend aus:
- Seitenwänden (11), die so gestaltet sind, dass sie eine Last in Richtung eines darunter liegenden Bodens (12) ableiten,
**dadurch gekennzeichnet, dass** er die folgenden Elemente umfasst
- eine genutete Platte (13), die den besagten Boden (12) des Trichters bildet und mit einer Vielzahl von Längsnuten (14) versehen ist, die nebeneinander angeordnet und über die Länge des Bodens (12) entwickelt sind,
- eine Auslassöffnung (15) auf der Höhe eines Endes der besagten genuteten Platte (13),
- einen Kammabstreifer (16), der mit Abstreifrippen (17, 17a) versehen ist, von denen jede so geformt ist, dass sie sich innerhalb einer entsprechenden Längsnut (14) der besagten genuteten Platte (13) bewegt,
- Bewegungsmittel (18), die geeignet sind, den besagten Kammabstreifer (16) auf der besagten genuteten Platte (13) zwischen einer Ruheposition und einer Hub-Endposition zu bewegen.

2. Ladetrichter nach Patentanspruch 1, **dadurch gekennzeichnet, dass** der besagte Kammabstreifer (16) einen Tragrahmen (20) aufweist, der auf einer Seite einen ersten vorderen Kamm (21) und auf der gegenüberliegenden Seite einen zweiten hinteren Kamm (22) aufnimmt, wobei der besagte erste Kamm (21) mit vorderen Abstreifrippen (17) versehen und geeignet ist, die auf dem Boden (12) des Trichters abgelegten Gegenstände bei der Vorwärtsbewegung des Abstreifers (16), das heißt von der Ruhestellung in die Hub-Endstellung, abzufangen, wobei der besagte zweite Kamm (22) mit hinteren Abstreifrippen (17a) versehen und geeignet ist, bei der Rücklaufbewegung weitere auf den Boden (12) gefallene Gegenstände abzufangen, wobei die Rücklaufbewegung so zu verstehen ist, dass sie von der Hub-Endstellung in die Ruhestellung erfolgt.

3. Ladetrichter nach einem oder mehreren der vorhergehenden Patentansprüche, **dadurch gekennzeichnet, dass** die besagten Wände (11) des Trichters eine Rückwand (11a) aufweisen, die zusammen mit dem Boden (12) eine Durchgangsöffnung (24) bildet, deren Größe so bemessen ist, dass der Abstreifer (16) durch sie hindurchtreten kann.

4. Ladetrichter nach einem oder mehreren der vorhergehenden Patentansprüche, **dadurch gekennzeichnet, das** unter dem der Auslassöffnung (15) gegenüberliegenden Ende der Platte (13) ein Sammel-Tray (26) angeordnet ist, das geeignet ist, die vom Abstreifer (16) bei der Rücklaufbewegung abgefangenen weiteren Gegenstände aufzunehmen.

5. Ladetrichter nach Patentanspruch 2, **dadurch gekennzeichnet, dass** der besagte Tragrahmen (20) zwei Querträger (27, 28), einen vorderen und einen hinteren, umfasst, die durch einen oder mehrere Versteifungsblöcke (29), welche die beiden Querträger (27, 28) verbinden, voneinander beabstandet sind.

6. Ladetrichter nach dem vorhergehenden Patentanspruch, **dadurch gekennzeichnet, dass** die Querträger (27, 28) mit seitlichen Halte-Elementen (29, 30) versehen sind, die geeignet sind, sie an den Bewegungsmitteln (18) zu halten.

7. Ladetrichter nach einem oder mehreren der vorhergehenden Patentansprüche, **dadurch gekennzeichnet, dass** die besagten Bewegungsmittel (18), die dazu bestimmt sind, den Abstreifer (16) auf der genuteten Platte (13) zu bewegen, zwei seitliche Ketten (35) umfassen, eine für jede Seite des Abstreifers (16).

8. Ladetrichter nach einem oder mehreren der vorhergehenden Patentansprüche, **dadurch gekennzeichnet, dass** jede Kette (35) äußere Maschen (37) aufweist, die mit einer Vielzahl von Anti-Haft-Rippen (38) versehen sind, die geeignet sind, zu verhindern, dass die im Trichter geförderten Gegenstände an der Kette (35) selbst haften.

9. Ladetrichter nach einem oder mehreren der vorhergehenden Patentansprüche, **dadurch gekennzeichnet, dass** jede Kette (35) für jeden der Zwischenräume zwischen zwei aufeinanderfolgenden Außenmaschen (37) einen Klemmschutzeinsatz (39) aufweist, der an einer entsprechenden Innenmasche der Kette (35) befestigt und geeignet ist, zu verhindern, dass jeglicher im Trichter vorhandene Gegenstand zwischen zwei Außenmaschen (37) stecken bleibt.

10. Ladetrichter nach einem oder mehreren der vorhergehenden Patentansprüche, **dadurch gekennzeichnet, dass** die besagten Seitenwände (11), die dazu bestimmt sind, eine Last in Richtung eines darunter liegenden Bodens (12) abzulenken, mit einem Raster aus Anti-Haft-Rippen (43) versehen sind, die auf der Gesamtheit ihrer Innenfläche verteilt sind.

## Revendications

1. Trémie de chargement (10) avec racleur, comprenant:
- des parois latérales (11) conçues pour dévier une charge vers un dessous sous-jacent (12),
**caractérisée en ce qu'**elle comprend
- une plaque rainurée (13) définissant ledit dessous (12) de la trémie et dotée d'une pluralité de cannelures longitudinales (14) qui sont disposées l'une à côté de l'autre et développées sur toute la longueur du dessous (12),
- une ouverture de déchargement (15) à hauteur d'une extrémité de ladite plaque rainurée (13),
- un racleur à peigne (16) doté de reliefs de raclage (17, 17a), chacun desquels est galbé de manière à ce qu'il peut se déplacer à l'intérieur d'une cannelure longitudinale correspondante (14) de ladite plaque rainurée (13),
- des moyens de déplacement (18) aptes à déplacer ledit racleur à peigne (16) sur ladite plaque rainurée (13) entre une position de repos et une position de fin de course.

2. Trémie de chargement selon la revendication 1, **caractérisée en ce que** ledit racleur à peigne (16) comprend un cadre porteur (20) qui supporte sur un côté un premier peigne avant (21) et sur le côté opposé supporte un deuxième peigne arrière (22), ledit premier peigne (21) étant doté de reliefs de raclage avant (17) et étant indiqué pour intercepter les objets déposés sur le dessous (12) de la trémie durant le mouvement d'avancement du racleur (16), c'est-à-dire de la position de repos à la position de fin de course, ledit deuxième peigne (22) étant doté de reliefs de raclage arrière (17a) et étant indiqué pour intercepter d'éventuels autres objets tombés sur le dessous (12) durant le mouvement de retour, où le mouvement de retour doit être entendu comme passer de la position de fin de course à la position de repos.

3. Trémie de chargement selon l'une quelconque des revendications précédentes, **caractérisée en ce que** lesdites parois (11) de la trémie comprennent une paroi arrière (11a) qui avec le dessous (12) définit une ouverture de passage (24) dont les dimensions sont telles à consentir le passage du racleur (16).

4. Trémie de chargement selon l'une quelconque des revendications précédentes, **caractérisée en ce qu'**au-dessous de l'extrémité de la plaque (13) disposée opposée à l'ouverture de déchargement (15) se trouve un plateau de recueil (26) qui est indiqué pour recueillir les objets ultérieurs interceptés par le racleur (16) durant le mouvement de retour.

5. Trémie de chargement selon la revendication 2, **caractérisée en ce que** ledit cadre porteur (20) comprend deux traverses (27, 28), une traverse avant et une traverse arrière, espacées l'une de l'autre par un ou plusieurs blocs de raidissement (29) reliant les deux traverses (27, 28).

6. Trémie de chargement selon la revendication précédente, **caractérisée en ce que** lesdites traverses (27, 28) sont pourvues d'éléments de blocage latéraux (29, 30) indiqués pour les bloquer sur les moyens de mouvement (18).

7. Trémie de chargement selon l'une ou plusieurs des revendications précédentes, **caractérisée en ce que** lesdits moyens de mouvement (18) conçus pour déplacer le racleur (16) sur la plaque rainurée (13) comprennent deux chaînes latérales (35), une pour chaque côté du racleur (16).

8. Trémie de chargement selon l'une ou plusieurs des revendications précédentes, **caractérisée en ce que** chaque chaîne (35) comprend des mailles extérieures (37) dotées d'une pluralité de reliefs anti-adhésion (38) indiqués pour empêcher l'adhésion des objets mouvementés dans le racleur à la chaîne (35) même.

9. Trémie de chargement selon l'une ou plusieurs des revendications précédentes, **caractérisée en ce que** chaque chaîne (35) comprend, pour chacun des espaces entre deux mailles extérieures consécutives (37), un insert anti-pincement (39) fixé à une maille intérieure correspondante de la chaîne (35) et indiqué pour empêcher que tout objet présent dans le racleur puisse se bloquer entre deux mailles extérieures (37).

10. Trémie de chargement selon l'une ou plusieurs des revendications précédentes, **caractérisée en ce que** lesdites parois latérales (11) conçues pour dévier une charge vers un dessous sous-jacent (12) sont dotées d'une matrice de reliefs anti-adhésion (43) distribuée sur toute leur surface intérieure.
